Europäisches Patentamt

(19) European Patent Office

Office européen des brevets

(11) Publication number : 0 390 010 B1

## (12) EUROPEAN PATENT SPECIFICATION

(45) Date of publication of patent specification :
25.01.95 Bulletin 95/04

(51) Int. Cl.⁶ : **G03B 35/20, G02B 27/24**

(21) Application number : 90105672.1

(22) Date of filing : 26.03.90

(54) Stereoscopic image apparatus.

(30) Priority : 24.03.89 JP 72688/89
24.03.89 JP 72689/89

(43) Date of publication of application :
03.10.90 Bulletin 90/40

(45) Publication of the grant of the patent :
25.01.95 Bulletin 95/04

(84) Designated Contracting States :
CH DE LI SE

(56) References cited :
FR-A- 423 768
FR-A- 1 138 813
FR-A- 2 483 091
US-A- 2 930 142
US-A- 3 542 556
US-A- 4 457 584
TASCHENBUCH DER MATHEMATIK,
I.N.Bronstein & K.A.Semedjajew, 18.edition,
1979, Frankfurt/Germany, pages 176-181, '4.
Die Ellipse'.

(73) Proprietor : **KABUSHIKI KAISHA TOPCON**
**75-1, Hasunuma-cho**
**Itabashi-ku**
**Tokyo 174 (JP)**
Proprietor : **JAPAN as represented by Director**
**General of Geographical Survey Institute**
**Ministry of Construction**
**1, Kitasato**
**Tsukuba-Shi Ibaragi (JP)**

(72) Inventor : **Murai, Shunji**
**21-9, 4-chome,Mejirodai**
**Hachioji-shi Tokyo 174 (JP)**
Inventor : **Koido,Kesami**
**103 of No 825,2,3-chome**
**Wagatuma**
**Takuba-Shi Ibaragi (JP)**
Inventor : **Shirasawa,Akishige**
**75-1,Hasunuma-Cho**
**Itabashi-ku Tokyo (JP)**

(74) Representative : **Altenburg, Udo, Dipl.-Phys. et**
**al**
**Patent- und Rechtsanwälte**
**Bardehle . Pagenberg . Dost . Altenburg .**
**Frohwitter . Geissler & Partner**
**Galileiplatz 1**
**D-81679 München (DE)**

# Description

## Technical Field of the Invention

The present invention relates to a stereoscopic image apparatus for calculating the position and the height of the stereoscopic model taken on a stereoscopic pair by viewing the stereoscopic pair three-dimensionally, and more particularly to a stereoscopic image apparatus wherein even when stereoscopic pairs different in size are used, the imaging distance is kept constant.

Further, the present invention relates to a stereoscopic image apparatus improved in operability of the adjustment of the interval between a pair of marker sections.

## Description of the Prior Art

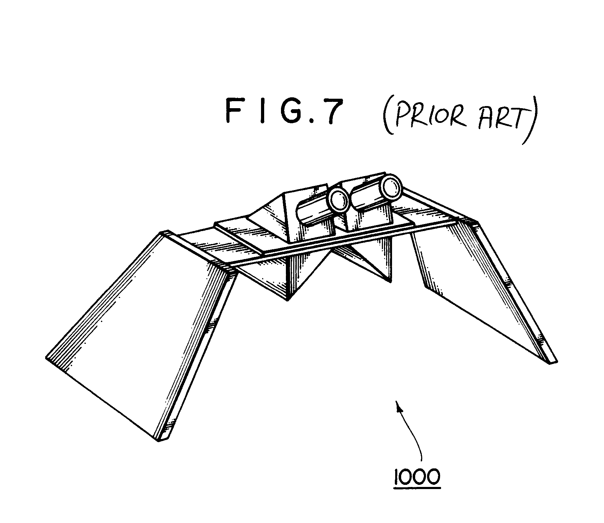

As prior stereoscopic image apparatus, for example, a reflective type stereoscope 1000 shown in Fig. 7 or the like is used. The reflective type stereoscope 1000 is constituted such that each of the lines of observation sights is bent at a right angle by a pair of a reflector and a prism, and a stereoscopic image is formed by eyepiece lenses. After a stereoscopic pair is fixed, the stereoscope is moved to carry out the intended stereoscopy. Then, parallax differences are measured by using a parallax measuring lever equipped with a pair of cursors to measure specific heights and the like. The adjustment of the interval between the pair of cursors is carried out in such a way that rotating shafts which are threaded reversely to each other are extended through two cursor sections, and the rotating shafts are rotated about their axes thereby adjusting the interval between the right and left cursors.

However, in the above prior reflective type stereoscope, renewal setting is required when photographs different in size are viewed three-dimensionally. The reflective type stereoscope is accompanied by a problem that since the focus adjustment must be repeated to correspond to the sizes of photographs, and the state of the observation changes inevitably, it is quite difficult to handle. Particularly, since the stereoscopy of stereoscopic pairs requires skill, the repeated readjustment imposes a needless burden on the user, and increases a sense of fatigue of the user, thereby causing a problem, that is, a measurement error.

Further, in the above prior stereoscopic image apparatus, since the adjustment of the interval between the pair of right and left cursors is carried out by rotating the rotating shafts about their axes, there is a problem that the operability is quite poor.

## Disclosure of the Invention

An object of the present invention is to provide a stereoscopic image apparatus that is easy to handle and wherein when the size of photographs is changed, the imaging distance is kept constant at all times. Another object of the present invention is to provide a stereoscopic image apparatus wherein dial operation can be carried out orthogonally to rotating shafts.

The present invention provides a stereoscopic imaging apparatus comprising a pair of imaging optical systems, defining a first and second optical axis, a pair of first mirrors to which a pair of stereoscopic photos can be opposed, and a pair of second mirrors for redirecting the image bearing light rays along the optical axes from said pair of first mirrors into said pair of imaging optical systems so that a stereoscopic image is formed. According to the invention said first mirrors are movably arranged along parabolas, said second mirrors are rotatably arranged, and first and second mirrors are kept parallel, respectively, so that the first optical axis and the second optical axis of said stereoscopic imaging apparatus remain perpendicular with respect to each of said stereoscopic photos wherein the arrangement is such that the distances between the photos and said imaging optical systems remain constant, when said mirrors are being moved.

According to a preferred embodiment, marker sections are arranged in the direction where a pair of imaging lens sections are arranged, and the marker sections can be moved away from each other or closer together by the same distance. The interval between the marker sections can be changed by a driving section as a handle is rotated which can be rotated about a rotation axis parallel to the optical axis of the imaging optical system.

The particular feature of the imaging apparatus according to the invention is not achieved by devices of the state of the art, which are constructed for stereophotographs of a particular and fixed size, e.g. US 2 930 142.

It is known (US 3 542 556) to move a mirror along an ellipse which may approach the shape of a parabola. The known device is adapted for relief photography, taking a continuous series of photographs of an object as viewed from different angles, without moving the object. No suggestion is made to move two related mirrors along a parabola and to combine them with second mirrors in constant parallel relation with the first, to achieve a device for viewing steroscopie photographs suitable for different sizes of such photographs with the imaging distance kept constant at all times and the optical axis of the device remaining perpendicular to the photographs.

## Brief Description of the Drawings

The drawings show an embodiment of the present invention, wherein Fig. 1 is an explanatory view of the constitution of the embodiment, Fig. 2 is an explanatory view of the state wherein the size of the stereoscopic photo is changed, Fig. 3 is an explanatory view of a cursor driving section, Fig. 4 is an explanatory view of a modified embodiment of the cursor driving section, Fig. 5 is diagrams illustrating the principle of the present invention, Fig. 6 is diagrams illustrating the properties of a parabola, and Fig. 7 is a view illustrating the prior art.

## The Principle of the Invention

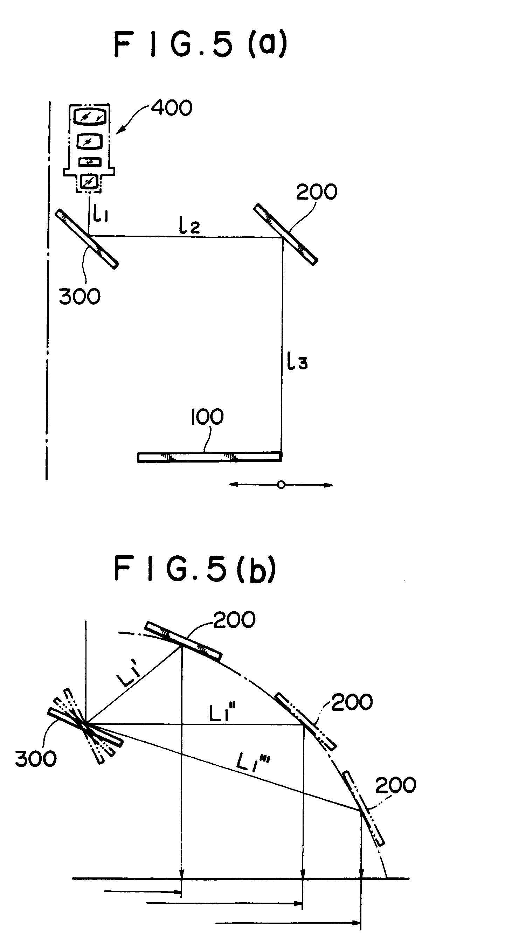

Now, referring to Fig. 5, the principle of the invention now will be described. Fig. 5 (a) shows the constitution of the present invention and the optical paths of the lines of observation sights, and the present invention comprises a stereoscopic pair 100, first mirrors 200, second mirrors 300, and eyepieces 400. The distance between the eyepiece 400 and the second mirror 300 is designated as $\ell_1$, the distance between the second mirror and the first mirror is designated as $\ell_2$, and the distance between the first mirror and the stereoscopic photo is designated as $\ell_3$. In order to keep the focus adjustment, the observation state, etc. constant without depending on the photo size, it is required that the imaging distance $\ell_1 + \ell_2 + \ell_3$ is kept constant for any photo size. Therefore, as shown in Fig. 5 (b), it is required to move the first mirror 200 along a parabola. That is, it is required to move the first mirror 200 to satisfy

$$L1' + L2' = L1'' + L2''$$
$$= L1''' + L2'''$$
$$= L1^n + L2^n.$$

Further it is required to adjust the second mirror 300 to be parallel with the first mirror 200 by changing the oblique angle of the second mirror 300 along with the movement of the first mirror 200.

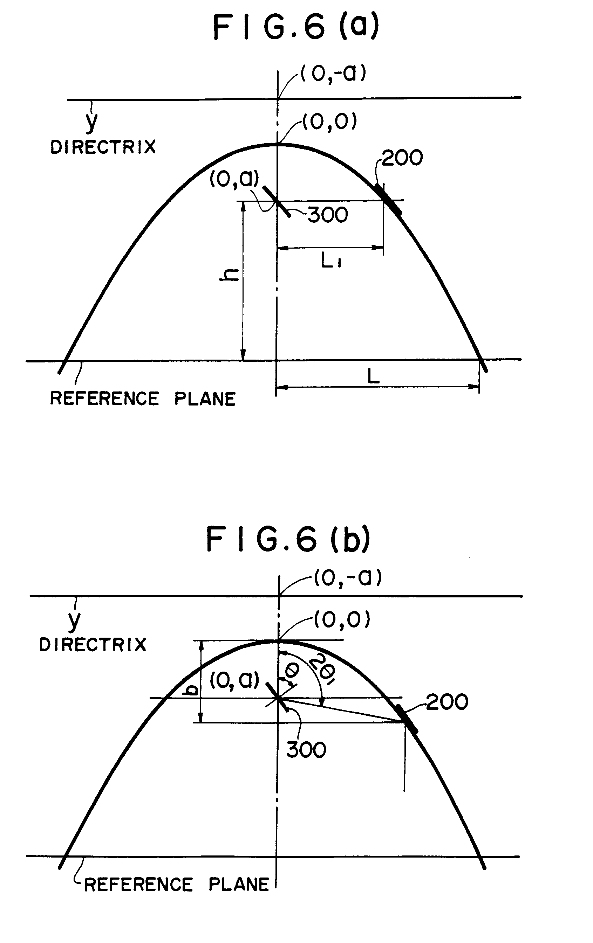

The parabola along which the first mirror 200 must be moved, and the oblique angle $\theta$ of the second mirror 300 will now be studied on the base of Fig. 6.

First, when the vertex of the parabola is designated as the origin of the coordinates, the parabola can be represented by

$$y^2 = 4ax \quad (1).$$

Here, the height of the second mirror 300 is designated as h, and the distance between the first mirror 200 and the second mirror 300 is designated as $L_1$ when the second mirror 300 reaches the height h. Then, a and x are given by

$$a = L_1/2$$
$$x = (L_1/2) + h.$$

Therefore, the y-coordinate where the reference plane and the parabola intersect is given by

$$y = \sqrt{4.(L_1/2).(L_1/2 + h)}$$
$$= 2\sqrt{(L_1/2).(L_1/2 + h)} \quad (2).$$

Further, referring to Fig. 6 (b), the oblique angle $\theta$ of the second mirror 300 will be studied. A vertical line is used as the reference, and the direction angle from the second mirror 300 to the first mirror 200 is designated as $2\theta_1$. When the distance from the origin to the first mirror 200 is designated as b, then since

$$y^2 = 4.(L_1/2).b,$$
$$y = 2\sqrt{(L_1/2).b} \quad (3).$$

Therefore, the direction angle $2\theta_1$ is given by

$$2\theta_1 = 90° + \cot^{-1}\frac{y}{x}$$
$$= 90° + \tan^{-1}\frac{x}{y}.$$

That is, the normal direction $\theta$ of the second mirror is given by

$$\theta = 45° + \frac{1}{2}\tan^{-1}\frac{x}{y} \quad (4).$$

## Detailed Description

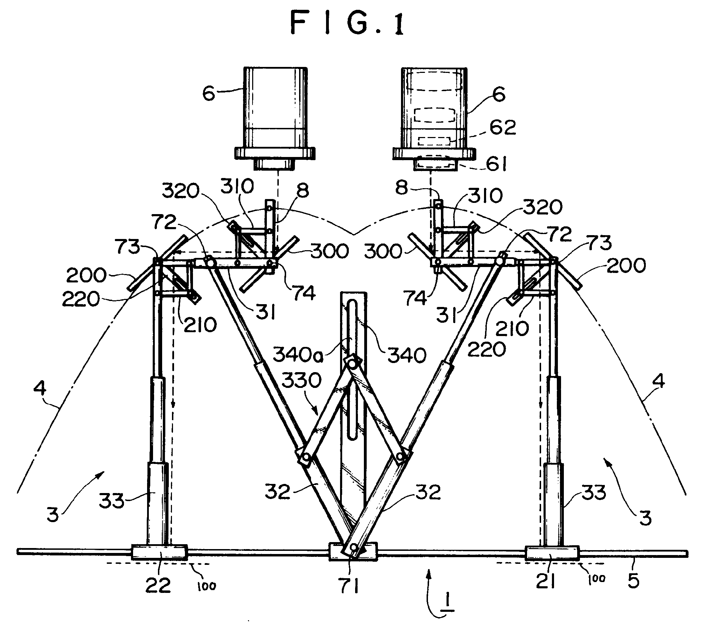

Referring to the drawings, an embodiment of the present invention will now be described. As shown in Fig. 1, the stereoscopic image apparatus 1 of the embodiment is made up of a right cursor section 21, a left cursor section 22, a cursor driving section 23, extendible/retractable arms 33, 33, first mirrors 200, 200, first pantographs 210, 210, second mirrors 300, 300, second pantographs 310, 310, parabola members 4, 4, a rail member 5, and ocular sections 6, 6. The right cursor section 21 and the left cursor section 22 on stereoscopic photos 100 serve as marker sections, and are provided with indexes for measuring parallax differences to find specific heights, etc. The right cursor section 21 and the left cursor section 22 can be slid on the rail member 5 by a suitable moving mechanism. The cursor driving section 23 serves as a driving section to move the right cursor section 21 and the left cursor section 22. The cursor driving section 23 can move the right cursor section 21 and the left cursor section 22, by the same distance, closer together or away from each other. Further, the cursor driving section 23 is provided with a moving mechanism for the adjustment to obtain a state where three-dimensional viewing becomes possible. The extendible/retractable arms 3, 3 are made up of first extendible/retractable arms 31, 31, second extendible/retractable arms 32, 32, and third extendible/retractable arms 33, 33. The extendible/retractable arm 3 is for moving the first mirror 200 along the parabola member 4, and the first extendible/retractable arm 31 is for moving the first mirror 200 horizontally. The second extendible/retractable arm 32 is for supporting the first mirror 200, and can move the first mirror vertically. Further, the third extendible/retractable arm 33 is for moving the first mirror 200 vertically. The lower ends of the second extendible/retractable arms 32, 32 are pivotally attached by a pivot 71 formed at approximately the center of the rail member 5. The pivotal fulcrums of the pair of second extendible/retractable arms 32, 32 are common, and are located at the pivot 71, and the second extendible/retractable arms 32, 32 can be pivoted about the pivot 71. The upper end of the second extendible/retractable arm 32 is pivotally attached by a pivot 72 formed at the first extendible/retractable arm 31. The pair of second extendible/retractable arms 32, 32 are moved by a third pantograph 330 in an interlocked manner. The third pantograph 330 is pivotally attached to an opening 340a vertically extended in a vertically fixed support 340 to control the pair of second extendible/retractable arms 32, 32 so that the second extendable/retractable arms 32, 32 may be opened or closed through the same angle. The first pantographs 210, 210, and the second pantographs 310, 310 are constructed in the same manner as that of the third pantograph 330. The lower ends of the third extendible/retractable arms 33, 33 are fixed to the right cursor section 21 and the left cursor section 22 respectively. The upper end of the third extendible/retractable arm 33 is pivotally attached by a pivot 73 formed in a position where the parabola member 4 and the first mirror 200 meet, and is connected to the first mirror 200. One end of the first extendible/retractable arm 31 is pivotally attached to a fixed section 8 fixed to the parabola member 4 by the pivot 74, and the other end of the first extendible/retractable arm 31 is pivotally attached to the first mirror 200 by the pivot 73.

The first mirrors 200 are opposed to a stereoscopic photos 100 and are for reflecting the lines of observation sights from the stereoscopic pair toward the second mirrors 300. The first mirrors 200 can be slid on the parabola members 4 by suitable moving means. The first mirror 200 is provided with the first pantograph 210 that can be pivoted by the pivot 73, and a first mirror supporting member 220 is formed along a diagonal of the first pantograph 210 so that the first mirror supporting member 220 and the first mirror 200 may make a right angle at all times. Therefore, by the first pantograph 210 and the first mirror supporting member 220, the oblique angle of the first mirror 200 is kept to coincide with the tangential direction of the parabola member 4. Even when the first mirror 200 is moved along the parabola member 4, the oblique angle of the first mirror 200 coincides with the tangential direction of the parabola member 4 at all times. The direction of the first mirror supporting member 220 is kept in the normal direction at the point where the first mirror 200 and the parabola member 4 meet.

The second mirror 300 is for leading the luminous flux from the first mirror 200 to the ocular section 6. The fixed section 8 that is vertically fixed is positioned at approximately the top of the parabola member 4, and the second mirror 300 is pivotally attached by the pivot 74 formed at the lower end of the fixed section 8. The second pantograph 310 is pivotally attached to the pivot 74, and a second mirror supporting member 320 is formed along a diagonal of the second pantograph 310. Therefore, the second mirror supporting member 320 and the second mirror 300 are kept to make a right angle at all times. The thus constituted second mirror 300 is moved about the pivot 74 formed at the fixed section 8 when the first mirror 200 is moved along the parabola member 4, and the oblique angle of the second mirror 300 is such that the second mirror 300 and the first mirror 200 are parallel. The pivot 74 is located at the focus of the parabola member 4.

The parabola members 4, 4 are constituted to draw suitably determined parabolas, and the first mirror 200 can be moved along the parabola member 4. The position of the pivot 74 formed at the fixed section 8 corresponds to the focus of the parabola. The rail member 5 is for moving the right cursor 21 and the left cursor 22 horizontally. Therefore when the right cursor 21 and the left cursor 22 are moved away from the position where the pivot 71 is formed, the first mirrors 200 are lowered along the parabola members 4 by the extendible/retractable arms 3. When the right and left cursors 21, 22 are moved toward the position of the pivot 71, the first mirrors 200 are elevated along the parabola members 4. The ocular sections 6 serve as an imaging optical system, and are each made up of an imaging lens section 61, a prism 62, etc. The ocular sections 6 can receive the luminous fluxes from the second mirrors 300 to form a stereoscopic image.

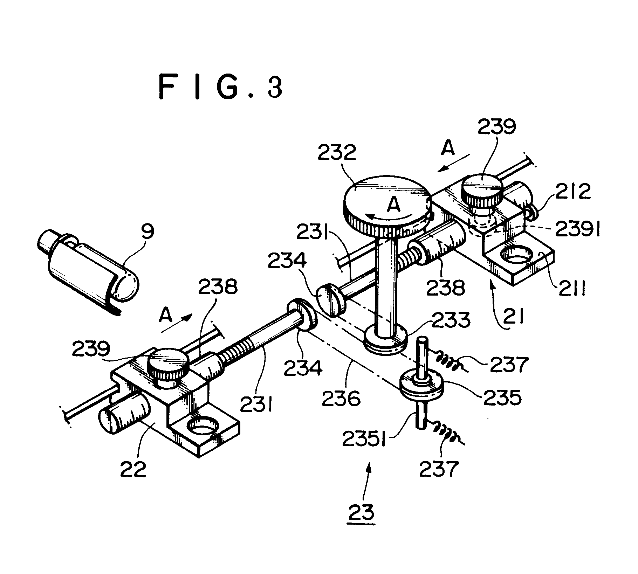

Referring to Fig. 3, an embodiment of the cursor driving section 23 will now be described. The cursor driving section 23 is made up of a pair of feed screws 231, 231, a knob 232, a first pulley 233, a pair of second pulleys 234, 234, a third pulley 235, a belt 236, tension springs 237, 237, a pair of racks 238, 238, and a pair of crank knobs 239, 239. Both the feed screws 231, 231 are right hand screws with the same pitch, and can engage threadably with the racks 238. The second pulleys 234 are formed at the ends of the feed screws 231. The first pulley 233 is connected to the knob 232, and when the knob 232 is rotated, the first pulley 233 is rotated synchronously therewith. The knob 232 serves as a handle, and can be rotated about a rotation axis parallel with the optical axis of the imaging optical system. The third pulley 235 is formed with a pivot 2351, and the tension springs 237, 237 are attached to the pivot 2351. The belt 236 is put over the second pulley 234, the first pulley 233, then the second pulley, and the third pulley in the stated order, and when the knob 232 is rotated, the first pulley 233 is rotated, and the rotation is transmitted through the belt to the pair of feed screws 231, 231 thereby causing them to rotate. For instance, when the knob 232 is rotated clockwise, the feed screw 234 on the side of the right cursor section 21 is rotated counterclockwise along with the helical groove whereas the feed screw 234 on the side of the left cursor section 22 is rotated clockwise along with the helical groove. As a result, the left and right cursor sections 21, 22 are moved closer together (in opposite directions shown by arrows A in Fig. 3) by the same distance. When the knob 232 is rotated counterclockwise, the rotational directions of the feed screws 234, 234 are reversed, and the right and left cursor sections 21, 22 are moved away from each other (in opposite directions) by the same distance. The rack 238 is attached to the right cursor section 21 through a pinion 2391 connected to the crank knob 239. Therefore, when the feed screws 234 are rotated, although the right cursor section 21 is moved simultaneously with the left cursor section 22, by rotating the crank knob 239, only the right cursor section 21 can be moved laterally.

In this embodiment, a mark section 211 formed at the right cursor section 21 can be constituted in such a way that it can be moved forward and backward. In this moving mechanism, a rack and pinion, a cam, etc. can be employed. Therefore, by rotating a cursor clamp knob 212 interlocked with the moving mechanism, the mark section 211 can be moved forward and backward to eliminate the vertical parallax.

It is desirable that the racks 238, 238 are graduated to allow the movements of the right and left cursor sections 21, 22 to be measured. The graduations may be formed on the rail members 5 in addition on the racks 238, 238.

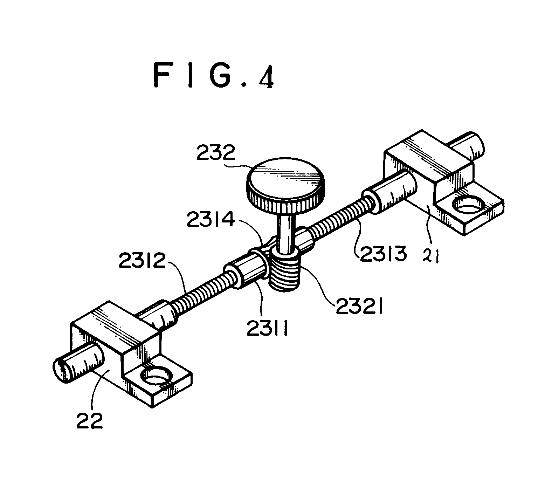

The cursor driving section 23 is not limited to the above embodiment, and it is enough if the left and right cursor sections 21, 22 can be moved closer together or away from each other by the same distance. Although in the above embodiment the left and right cursor sections 21, 22 are formed, for example, with the racks 238, 238, it is also possible that the left and right cursor sections 21, 22 are formed with tapped holes and straight screws are passed through the tapped holes. Further, although in the above embodiment a belt driving is employed, a chain or a wire can be used. It is also possible that, as shown in Fig. 4, a worm 2321 is extended from the knob 232, the opposite ends of a single feed screw 2311 are formed with screw sections 2312, 2313 threaded in opposite directions, and a driven gear section 2314 formed in the middle of the feed screw 2311 is meshed with said worm 2321.

Near the left and right cursor sections 21, 22 may be attached lighting lamps 9.

Now how to use the illustrated stereoscopic image apparatus 1 will be described. A set of stereoscopic photos 100, 100 are placed opposite to the first mirrors 200, 200. Use is not limited to photographs, and any stereoscopic images can be used. In accordance with the size of the stereoscopic photos , the knob 232 is rotated. When the knob 232 is rotated, the interval between the left and right cursor sections 21, 22 is changed, the third extendible/retractable arms 33, 33 connected to the left and right cursor sections 21, 22 are moved, and therefore the first mirrors 200, 200 are moved along the parabola members 4, 4. The extent of the rotation of the knob 232 can be known from the graduations formed on the racks 238. After the left and right cursor sections 21, 22 are set in suitable positions, three-dimensional viewing is carried out. The lines of observation, sights from the stereoscopic photos 100, 100 are reflected by the first mirrors 200, 200 positioned vertically over them, and the luminous fluxes reflected by the second mirrors 300, 300 enter the ocular sections 6 where a stereoscopic image can be formed. Then, when the three-dimensionally viewed mark is adjusted to become a mark by adjusting the clamp knob 239 formed at the left cursor section 21, the parallax can be measured. It becomes possible to calculate the specific heights, etc. from the parallax differences. By rotating the cursor clamp knob to move the mark section 211 forward and backward adjustably, the vertical parallax can be eliminated.

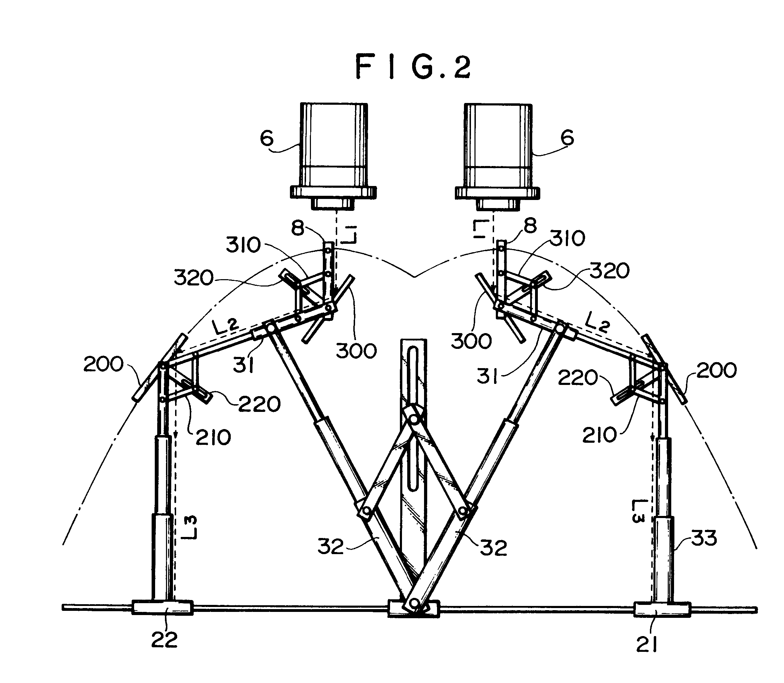

Now, the case wherein stereoscopic photos 100, 100 whose size is different are used will be described. In this case, the knob 232 is rotated to adjust the interval between the left and right cursor sections 21, 22 with reference made to the graduations formed on the racks 238. As shown in Fig. 2, along with the movement of the left and right cursor sections 21, 22, the third extendible/retractable arms 33, 33 are moved horizontally, and therefore the first mirrors 200, 200 are moved along the parabola members 4, 4. The first mirrors 200, 200 coincide with the tangential direction of the parabolas at all times, and the second mirrors 300, 300 are also kept in parallel with the inclination of the first mirrors 200, 200. Further, since the rotation axes of the second mirrors 300, 300 are set in the positions of the focuses of the parabola members 4, 4, the imaging distance $L_1 + L_2 + L_3$ becomes constant regardless of the positions of the first mirrors 200, 200. Therefore, in the case wherein stereoscopic photographs 100, 100 having any size are used, the state of the observation does not change, resulting an effect that readjustment is not required. Although to view stereoscopic photographs three-dimensionally requires skilled operation, the readjustment can be omitted, so that there is an excellent effect that the measuring efficiency can be increased.

Since, in the invention constituted as described above, the lines of observation sights from the stereoscopic images are reflected by the first mirrors, and then are led by the second mirrors to imaging lens sections, where a stereoscopic image is formed, and the first mirrors are moved generally along the parabolas whose focuses in the positions where the second mirrors are located, there is an effect that if the first mirrors are moved in conformity with the size of the stereoscopic image the imaging distance can be kept constant at all times. Therefore, if the photograph size is changed, readjustment such as adjustment of the focus is not required, three-dimensional viewing can be continued without the state of the observation being changed, and therefore there are excellent effects that the handling is easy and the measuring efficiency can be improved.

In the present invention, since the marker sections are arranged in the direction in which the pair of imaging lens sections are arranged, and the marker sections can be moved closer together or away from each other by the same distance, when the size of photos to be measured is changed, there is an effect that the interval between the markers changes to correspond to the movement of the first mirrors. Therefore there is an excellent effect to provide a stereoscopic image apparatus wherein readjustment such as adjustment of the focus is nor required and the same state of observation can be kept.

Further, in the present invention, the lines of observation sights from the stereoscopic images are reflected by the first mirrors, and then are led by the second mirrors to imaging lens sections, where a stereoscopic image is formed, marker sections are arranged in the direction in which a pair of imaging lens sections are arranged, and since the marker sections can be moved closer together or away from each other along with the rotation of the handle that is rotated about an axis which is parallel with the optical axis of the imaging optical system, there is an effect that the moving operation can be effected by the handle orthogonal to the direction of the movement of the marker sections. Therefore, there are effects that the moving operation of the marker sections can be effected quite naturally, and the measuring efficiency is improved. These stereoscopic photos are formed by for example photopraphs, TV monitors or pictures etc.

## Claims

1. A stereoscopic imaging apparatus comprising a pair of imaging optical systems (6, 6), defining a first and second optical axis, a pair of first mirrors (200, 200) to which a pair of stereoscopic photos (100, 100) can be opposed, a pair of second mirrors (300, 300) for redirecting the image bearing light rays along the optical axes from said pair of first mirrors (200, 200) into said pair of imaging optical systems (6, 6) so that stereoscopic image is formed, characterized in that said first mirrors (200, 200) are movably arranged along parabolas (4, 4), said second mirrors (300, 300) are rotatably arranged, and said first and second mirrors (200, 300 ; 200, 300) are kept parallel, respectively, so that the first optical axis and the second optical axis of said stereoscopic imaging apparatus remain perpendicular with respect to each of said stereoscopic photos (100, 100), wherein the arrangement is such that the distances between the photos and said imaging optical systems remain constant, when said mirrors (200, 200, 300, 300) are being moved.

2. A stereoscopic imaging apparatus as claimed in claim 1, wherein when said first mirrors (200, 200) are moved along the parabolas, said second mirrors (300, 300) are rotated about the positions of said focuses.

3. A stereoscopic imaging apparatus as claimed in claim 1, wherein said first mirrors (200, 200) are arranged to be rotated while being moved along the parabolas (4).

4. A stereoscopic imaging apparatus as claimed in claim 1, wherein a pair (21, 22) of marker sections are movably arranged along a line intersecting the optical axes of the optical systems (6, 6), and wherein said marker sections can be moved closer together or away from each other by the same distance.

5. A stereoscopic imaging apparatus as claimed in claims 1 and 4, further including a handle (232) that can be rotated about an axis parallel with the optical axes of said imaging optical systems, and a driving section (23) for changing the interval between said marker sections.

6. A stereoscopic imaging apparatus as claimed in claim 5, wherein said driving section (23) is made up of a wire (236) for connecting said handle and markers.

7. A stereoscopic imaging apparatus as claimed in claim 5, wherein said driving section (23) is made up of a gear (2314) for connecting said handle and marker sections.

## Patentansprüche

1. Stereoskopische Vorrichtung mit einem Paar von bildgebenden optischen Systemen (6, 6), die eine erste und zweite optische Achse definieren, einem Paar von ersten Spiegeln (200, 200), denen ein Paar von stereoskopischen Fotos (100, 100) gegenübergestellt werden kann, einem Paar von zweiten Spiegeln (300, 300) zum Umlenken der bildtragenden Lichtstrahlen längs der optischen Achsen von dem Paar erster Spiegel in das Paar bildgebender optischer Systeme (6, 6), so daß ein stereoskopisches Bild erzeugt wird, dadurch gekennzeichnet, daß die ersten Spiegel (200, 200) entlang von Parabeln (4, 4) beweglich angeordnet sind, die zweiten Spiegel (300, 300) drehbar angeordnet sind, und daß erste und zweite Spiegel (200, 300; 200, 300) jeweils parallel gehalten werden, so daß die erste optische Achse und die zweite optische Achse der stereoskopischen Vorrichtung senkrecht zu jedem der stereoskopischen Fotos (100, 100) bleiben, wobei die Anordnung so getroffen ist, daß die Abstände zwischen den Fotos und den bildgebenden optischen System konstant bleiben, wenn die Spiegel (200, 200, 300, 300) bewegt werden.

2. Stereoskopische Vorrichtung nach Anspruch 1, wobei, wenn die ersten Spiegel (200, 200) entlang Parabeln bewegt werden, die zweiten Spiegel (300, 300) um die Positionen der Brennpunkte bewegt werden.

3. Stereoskopische Vorrichtung nach Anspruch 1, wobei die ersten Spiegel (200, 200) zur Verdrehung eingerichtet sind, während sie entlang der Parabeln (4) bewegt werden.

4. Stereoskopische Vorrichtung nach Anspruch 1, wobei ein Paar (21, 22) von Markierungsabschnitten beweglich entlang einer Linie angeordnet sind, die die optischen Achsen der optischen Systeme (6, 6) schneidet, und wobei die Markierungsabschnitte näher zueinander oder voneinander weg um den gleichen Abstand bewegt werden können.

5. Stereoskopische Vorrichtung nach Anspruch 1 und 4, enthaltend ein Handrad (232), das um eine Achse parallel zu den optischen Achsen der bildgebenden optischen Systeme gedreht werden kann, und einen Antriebsteil (23) zur Änderung des Abstandes zwischen den Markierungsabschnitten.

6. Stereoskopische Vorrichtung nach Anspruch 5, wobei der Antriebsteil (23) einen Draht (236) zur Verbindung von Handrad und Markierungsabschnitten enthält.

7. Stereoskopische Vorrichtung nach Anspruch 5, wobei der Antriebsabschnitt (23) aus einem Getriebe (2314) zur Verbindung zwischen Handrad und Markierungsabschnitten besteht.

**Revendications**

1. Dispositif de reproduction d'images stéréoscopique comprenant une paire de systèmes optiques de reproduction d'images (6, 6) définissant un premier et un second axe optique, une paire de premiers miroirs (200, 200), en face desquels une paire de photos stéréoscopiques (100, 100) peuvent être placées, une paire de seconds miroirs (300, 300) pour rediriger les rayons de lumière portant une image lelong des axes optiques de ladite paire de premiers miroirs (200, 200) dans ladite paire de systèmes optiques de reproduction d'images (6, 6) de façon à ce qu'une image stéréoscopique soit formée,
caractérisé en ce que lesdits premiers miroirs (200, 200) sont disposés de façon à pouvoir être déplacés lelong de paraboles (4, 4), et en ce que lesdits seconds miroirs (300, 300) sont disposés de façon à pouvoir tourner, et en ce que lesdits premiers et seconds miroirs (200, 300; 200, 300) sont maintenus respectivement en parallèle, de façon à ce que ledit premier axe optique et ledit second axe optique dudit dispositif de reproduction d'images stéréoscopique restent perpendiculaire par rapport à chacune desdites photos stéréoscopiques (100, 100), l'agencement étant tel que les distances entre les photos et lesdits systèmes optiques de reproduction d'images restent constantes lorsque lesdits miroirs (200, 200, 300, 300) sont déplacés.

2. Dispositif de reproduction d'images stéréoscopique selon la revendication 1, dans lequel lesdits deuxièmes miroirs (300, 300) sont pivotés autour des positions desdits foyers lorsque lesdits premiers miroirs (200, 200) sont déplacés lelong des paraboles.

3. Dispositif de reproduction d'images stéréoscopique selon la revendication 1, dans lequel lesdits premiers miroirs (200, 200) sont agencés de façon à subir une rotation pendant qu'ils sont déplacés lelong des paraboles.

4. Dispositif de reproduction d'images stéréoscopique selon la revendication 1, dans lequel une paire (21, 22) de sections de marquage est disposée de façon à pouvoir être déplacée lelong d'une ligne intersectant les axes optiques des systèmes optiques (6, 6), et dans lequel lesdites sections de marquage peuvent être amenées plus proche l'une de l'autre ou être éloignées l'une de l'autre sur une même distance.

5. Dispositif de reproduction d'images stéréoscopique selon les revendications 1 et 4, comprenant en outre une manette (232) qui peut être tournée autour d'un axe parallèle à l'axe optique desdits systèmes optiques de reproduction d'images, et une section de commande (23) pour changer l'intervalle entre lesdites sections de marquage.

6. Dispositif de reproduction d'images stéréoscopique selon la revendication 5, dans lequel ladite section de commande (23) consiste en un fil (236) pour connecter ladite manette avec lesdites sections de marquage.

7. Dispositif de reproduction d'images stéréoscopique selon la revendication 5, dans lequel ladite section de commande (23) consiste en une commande de transmission (2314) pour connecter ladite manette avec lesdites sections de marquage.

# FIG.1

EP 0 390 010 B1

FIG.2

# F I G. 3

EP 0 390 010 B1

FIG.4

EP 0 390 010 B1

# F I G . 5 (a)

# F I G . 5 (b)

13

## F I G. 6 (a)

## F I G. 6 (b)

F I G . 7  (PRIOR ART)

1000